# FASCICULE DE BREVET EUROPEEN

(11) **EP 3 562 771 B1**
(45) Date de publication et mention de la délivrance du brevet: **28.08.2024**
(21) Numéro de dépôt: 16925509.8
(22) Date de dépôt: 30.12.2016
(51) Int. Cl.: B65G 57/02, B25J 9/18, B65G 61/00, B65G 57/03

(54) **PALETTISATION ROBOTISEE**
ROBOTISIERTE PALETTIERUNG
ROBOTISED PALLETISATION

(43) Date de publication de la demande: 06.11.2019
(73) Titulaire: SIDEL CANADA INC., Laval, QC H7W 4V3 (CA)
(72) Inventeur: KLOTZ, Franck, Laval, Québec H7W 4V3 (CA)
(74) Mandataire: Sidel Group
(86) Numéro de dépôt international: PCT/IB2016/001931
(87) Numéro de publication internationale: WO 2018/122568

(56) Documents cités:
- EP-A2- 1 565 393
- WO-A1-2014/026358
- CN-A- 105 417 181
- FR-A1- 2 987 774
- JP-A- 2003 226 430
- US-A- 3 023 916
- US-A- 3 743 112
- US-A1- 2010 027 255
- US-A1- 2012 016 395
- SCHNEIDER ELECTRIC: "Application Notes: Pallet Dispenser (2004)", 4 April 2004 (2004-04-04), XP055423494, Retrieved from the Internet <URL:http://static.schneider-electric.us/docs/Motor Control/0105DB0401.pdf> [retrieved on 20171109]
- SMI S.P.A.: "APS 1550 P palletizer", YOUTUBE, 4 February 2016 (2016-02-04), pages 1 - 6, XP054978366, Retrieved from the Internet <URL:https://www.youtube.com/watch?v=BPU_A_n2aNI> [retrieved on 20180524]
- PACKLINE MATERIALS HANDLING: "Pallet De-stacking and Dispensing from Ferroplan and Packline", PACKLINE.WORDPRESS.COM, 25 September 2014 (2014-09-25), pages 1 - 5, XP055981290, Retrieved from the Internet <URL:https://packline.wordpress.com/2014/09/25/pallet-de-stacking-and-dispensing-from-ferroplan-and-packline/> [retrieved on 20221115]

## Description

La présente invention relève du domaine de la palettisation de produits dans une ligne industrielle de traitement à la chaîne, et a pour objet, d'une part, un dispositif de palettisation particulier, et, d'autre part, un procédé mettant en oeuvre ce dispositif.

Plus particulièrement, l'invention concerne les lignes à basse cadence, dans lesquelles le débit de produit à palettiser est suffisamment faible pour qu'un humain puisse s'occuper manuellement de déposer l'un après l'autre les produits sur une palette. Cette opération est exécutée aujourd'hui manuellement, jusqu'à l'obtention d'une palette pleine, présentant une superposition de couches, chaque couche comprenant plusieurs produits ou colis. Les opérateurs interviennent aussi régulièrement pour retirer une palette pleine et/ou remettre en place une palette vide. De plus, ce genre de ligne doit généralement respecter des conditions d'espace au sol réduit et éviter tout risque pour les opérateurs qui travaillent et circulent sur la ligne.

Il existe aujourd'hui pour ces applications à basse cadence le besoin de trouver des solutions qui limitent le recours à des opérateurs, tant pour des raisons de sécurité, de santé, de fiabilité et répétabilité que de coût d'exploitation global.

Des machines de palettisation sont déjà connues de l'art antérieur. Par exemple, EP2964552, ou encore EP1457442, décrit une machine de palettisation, dans laquelle les produits sont transférés par couches successives glissées puis superposées sur une palette. Un tel équipement est particulièrement adapté pour des produits débités à une cadence bien plus élevée et est donc très largement surdimensionné et donc trop onéreux pour des cadences plus faibles. En outre, l'empattement au sol est bien trop important pour des lignes basses cadences.

On connaît aussi des solutions utilisant des robots multiaxe pour saisir les produits et les déposer par couches successives sur une palette, par exemple EP2186761 et DE202011100913. Un inconvénient majeur reste qu'une telle solution robotique représente un investissement conséquent par rapport auquel un travail manuel est bien plus rentable. De plus, compte tenu des conditions de sécurité, de tels robots doivent être entourés par des enceintes fermées, avec des conditions d'accès. En effet, leurs mouvements et leurs dimensionnements les rendent dangereux pour des humains, en particulier à cause des chocs possibles.

Il existe des solutions à base de robot qui peuvent être approchés par les humains, et donc qui peuvent être librement accessibles, hors d'une enceinte close. Par exemple, US20080215597 divulgue une solution pour ajuster la vitesse de fonctionnement d'un robot en fonction de la proximité d'un humain. Cela permet alors d'éviter des mouvements trop rapides de masses en mouvement, qui pourraient blesser des opérateurs.

Un des inconvénients d'une telle solution d'ajustement du fonctionnement est que dans une ligne à basse cadence où circulent beaucoup d'opérateurs, notamment, comme déjà évoqué, pour décharger une palette vide et prendre une palette pleine, la détection incessante peut conduire à un fonctionnement extrêmement perturbé pour le robot.

En ce qui concerne la circulation des palettes, des solutions autres que manuelles sont déjà connues : par exemple, US2014294553 décrit un convoyeur à base de rouleaux pour amener les palettes vides l'une après l'autre dans la zone où les produits sont déposés par couche successive, et US3757966 décrit quant à lui une solution à base de convoyeur à rouleau pour l'extraction de palette pleine. Ce genre d'équipement, bien que contribuant à réduire la nécessité d'un opérateur ainsi que les perturbations que sa circulation provoque sur un robot qui ajuste son fonctionnement aux présences dans son environnement, est bien trop onéreux par rapport à un travail manuel et nécessite un empattement au sol incompatible avec les exigences des lignes basses cadences. JP 2003 226430 A divulgue un dispositif de palettisation selon le préambule de la revendication 1.

De façon générale, des solutions à base de convoyeurs présentent en outre l'inconvénient d'être peu flexibles et adaptables en fonction des besoins de production, qui peuvent nécessiter des flux différents à chaque lot.

Dans ce domaine de la palettisation de produits en couches superposées comprenant, chacune, plusieurs produits, il existe donc aujourd'hui un besoin d'améliorer l'existant décrit ci-dessus, en proposant un équipement qui permet de réduire l'intervention des opérateurs dans une ligne basse cadence, ladite solution étant autant que possible compacte, simple, peu onéreuse, adaptable et/ou de fonctionnement fiable et fluide.

Pour ce faire, l'invention propose de palettiser les produits à l'aide d'un robot lui-même sécurisé, alors localisé hors d'une enceinte close de sécurité, déposant par couche successive les produits sur le haut d'un empilement de plusieurs palettes. On réduit alors de façon significative l'intervention des opérateurs pour déposer les produits sur une palette, ou pour mettre en place une nouvelle palette.

L'invention a ainsi pour objet un dispositif de palettisation selon la revendication 1 comprenant, d'une part, pour saisir et déplacer les produits à palettiser, un robot multiaxe librement accessible, et, d'autre part, pour recevoir les palettes sur lesquelles les produits sont déposés, au moins une station aménagée au sol.

Selon l'invention, la au moins une station est configurée pour recevoir et référencer en position un empilement de palettes l'une sur l'autre.

L'invention a aussi pour objet une méthode selon la revendication 7 mise en oeuvre par ce dispositif, à savoir un procédé de palettisation à l'aide d'un robot travaillant dans une zone libre d'accès, comprenant des étapes consistant essentiellement à, d'une part, saisir l'un après l'autre sur une zone de réception les produits à palettiser, et, d'autre part, déplacer les produits saisis et les déposer sur une palette.

Ce procédé comprend une étape de dépose au cours de laquelle la palette sur laquelle les produits sont déposés repose sur au moins une autre même palette au sein d'une station.

L'invention sera mieux comprise grâce à la description ci-dessous, qui se base sur des modes de réalisations possibles, expliqués de façon illustrative et nullement limitative, en référence avec les figures annexées, dans lesquelles :

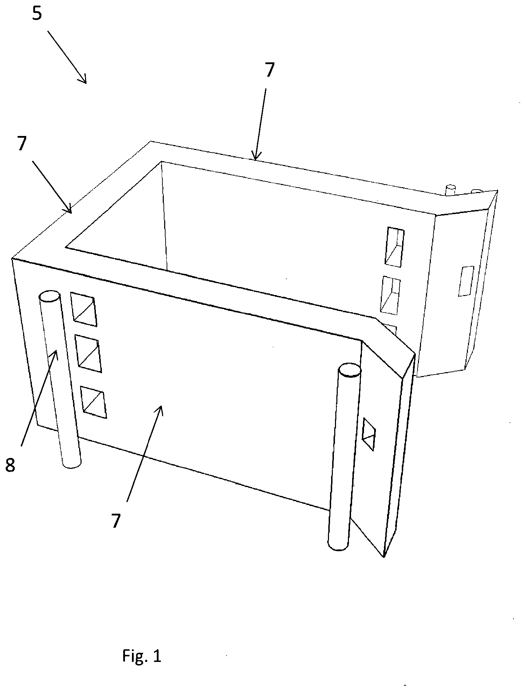

- la figure 1 montre une station dans un mode de réalisation de l'invention ;

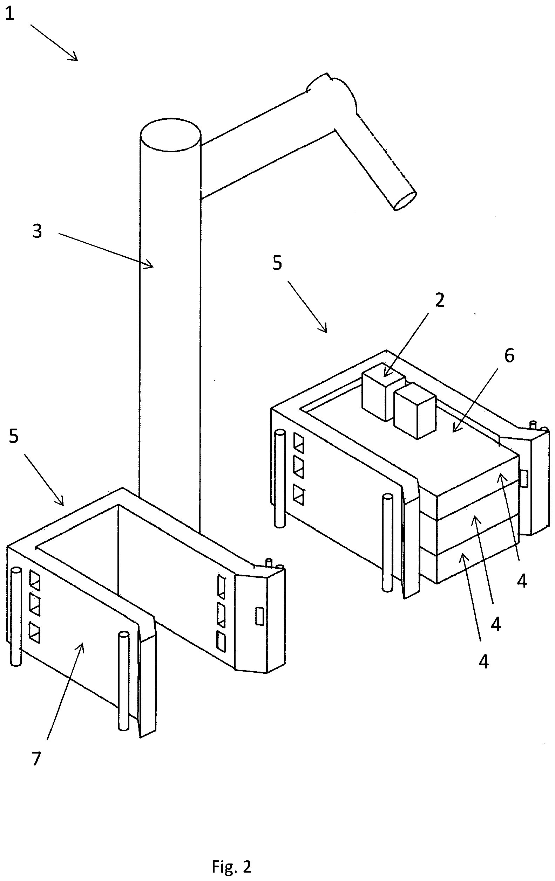

- la figure 2 montre un dispositif avec un robot et deux stations, l'une étant déjà chargée d'un empilement de palettes, l'autre étant vide.

L'invention a donc tout d'abord comme objet un dispositif de palettisation 1 comprenant, d'une part, pour saisir et déplacer les produits 2 à palettiser, un robot 3 multiaxe librement accessible, et, d'autre part, pour recevoir les palettes 4 sur lesquelles les produits 2 sont déposés, au moins une station 5 aménagée au sol.

Les produits 2 sont préférablement disposés sur une palette 4 sous forme de plusieurs couches superposées, chaque couche présentant plusieurs produits 2.

Le dispositif est dépourvu de parois ou grillages interdisant ou restreignant l'accès au robot. Bien que le dispositif puisse présenter des parois autour du robot, ce dernier n'est pas dans une zone de travail entièrement close dont l'accès est contrôlé. Le robot évolue donc dans une zone de travail accessible à tout opérateur intervenant sur la ligne. Le dispositif de palettisation 1 est ainsi dépourvu d'un enclos fermé de sécurité, à l'intérieur duquel seul des opérateurs autorisés peuvent circuler. Ce genre de robot 3 dit collaboratif est accessible par n'importe qui, sans avoir à ouvrir au préalable la cage dans laquelle le robot 3 travaille et souvent délimitée par des grillages de sécurité.

Le robot 3 est donc positionné hors d'une enceinte de sécurité close, voire à accès restreint et/ou contrôlé. Une telle enceinte de sécurité aurait normalement pour fonction de sécuriser précisément la zone de travail du robot et d'éviter que n'importe quel opérateur pénètre la zone de travail. Des accès à clé, carte, code, ou autres existent. Dans l'invention, la zone de travail du robot 3 est accessible par tout opérateur et le robot 3 est intrinsèquement sécurisé, sans risque pour les personnes de l'environnement.

Dans certaines applications, le robot 3 peut travailler à une cadence suffisamment faible pour que sa vitesse ne soit pas dangereuse pour les opérateurs autour de lui. Dans ces cas, la cadence du robot n'est pas nécessairement ajustée à la détection d'une présence autour de lui, et le dispositif peut être dépourvu d'un système de détection pour l'environnement du robot 3. Dans d'autres configurations, le robot 3 est amené à travailler à des cadences qui représentent des éventuels risques pour un opérateur qu'il viendrait heurter lors d'un mouvement. Dans ces cas, comme le robot 3 est hors d'une enceinte close et que des opérateurs peuvent alors circuler dans sa zone de travail, le dispositif 1 est préférablement muni d'un système de surveillance de la zone de travail du robot 3, ce système ayant pour but de signaler une présence dans la zone de travail dans le but de modifier la vitesse de fonctionnement du robot 3.

Selon l'invention, la au moins une station 5 est configurée pour recevoir et référencer en position un empilement 6 de palettes 4 l'une sur l'autre, de sorte que, à part pour la palette 4 inférieure dans l'empilement, il ne soit pas nécessaire, lorsqu'une palette 4 a été entièrement complétée, d'amener la palette 4 suivante dans la station 5. On évite ainsi le recours à un opérateur, une machine ou autres à la fréquence de l'extraction des palettes 4 pleines.

Le référencement est réalisé dans le plan horizontal, de sorte que le robot 3 n'a pas besoin de détecter la position horizontale exacte de la palette 4 à traiter. En outre, le référencement se fait par butées contre lesquelles chaque palette 4 de l'empilement 6 peut venir, de sorte que le référencement en position dans le plan horizontal se fait simultanément pour chaque palette 4. Même si les palettes 4 sont initialement légèrement décalées dans le plan horizontal l'une par rapport à l'autre au sein de l'empilement 6 avant qu'il soit inséré et calé dans la station 5, elles finissent par l'être grâce à la dépose en fond de station 5, contre des butées correspondantes.

On peut prévoir des capteurs qui détectent la bonne position de chacune des palettes 4 de l'empilement 6. Ces capteurs peuvent être couplés au moyen de détection de palette 4 décrit plus loin, de sorte à ne prendre en compte son signal de bon positionnement que si une palette 4 est effectivement présente à la hauteur correspondante.

Dans certains modes de réalisation particuliers, le dispositif présente, à côté de la au moins station 5, une zone au sol, qui peut recevoir au moins une palette 4. Ainsi, dans l'environnement du robot 3 collaboratif est prévu un espace où l'on peut déposer une palette 4 sur laquelle il sera possible de déposer des produits 2 pendant les courts instants de non-disponibilité de la station 5. Cette zone supplémentaire se différencie de la station 5 en ce sens qu'elle peut éventuellement être configurée pour ne recevoir et référencer qu'une seule palette 4 à la fois.

Selon une caractéristique additionnelle possible, le dispositif 1 comprend deux stations l'une à côté de l'autre 5, le robot 3 étant positionné entre elles, de sorte que, lorsque la au moins une station 5 ne peut pas recevoir de produits 3 et que le robot 3 ne peut alors pas y déposer de produit 2, comme par exemple lorsque la palette 4 supérieure dans l'empilement 6 de palettes 4 est pleine ou en cas d'absence de palette 4 dans ladite station 5, il lui est possible de déposer les produits 2 ailleurs, notamment sur l'empilement 6 présent dans l'autre station 5 ou dans la zone au sol.

Selon une autre caractéristique additionnelle possible, la au moins une station 5 présente des parois 7 verticales de référencement de l'empilement 6 de palettes 4 que ladite station 5 peut recevoir, s'étendant sur une hauteur correspondant à plusieurs palettes 4, en particulier quatre, de sorte que chaque palette 4 de l'empilement 6 stocké dans la station 5 puisse être référencée en position par ces parois formant butées d'arrêt lors de l'insertion. On notera ici que les palettes 4 sont généralement de dimension normalisée et que cette hauteur est donc prévisible en fonction du nombre de palettes 4 visé dans l'empilement 6.

Les parois 7 peuvent être au nombre de deux, orientées perpendiculairement l'une par rapport à l'autre définissant un coin contre lequel l'empilement 6 de palettes 4 peut venir être référencé. Dans des modes de réalisation particuliers, la station 5 présente trois parois 7 verticales, deux d'entre elles étant parallèles l'une à l'autre, l'autre leur étant perpendiculaire, les deux parois parallèles délimitant les bords latéraux pour l'empilement 6, et la troisième délimitant le fond. Ces parois sont suffisamment solides pour résister à un effort d'aboutement exercé par une machine venant déposer un empilement 6 et le pressant contre lesdites parois. Les parois sont donc éventuellement renforcées avec des liens en sols, le cas échéant.

Préférablement, la station 5 présente ainsi, vu de haut, une forme de U, qui délimite un rectangle défini par le pourtour des palettes 4 qu'elle peut recevoir et référencer, la forme du U étant éventuellement, en outre, évasée à l'ouverture pour faciliter l'insertion des palettes 4.

La station 5 présente préférablement aussi des moyens de butée pour un chariot amenant l'empilement 6 de palette 4. En effet, comme l'empilement 6 doit être appuyé contre les parois 7 pour y être référencé, une force excessive ou des chocs répétés peut détériorer le fond de la station 5. Une solution à ce problème est de munir la station, au niveau de la position que doit prendre le chariot en fin de mouvement d'amenée d'empilement 6, de butée au sol, qui arrêteront le chariot suffisamment tôt pour éviter notamment que l'extrémité des fourches vienne frapper la station, ou simplement qu'un opérateur insère l'empilement 6 trop profondément ou déteriore la station 5 progressivement. Ces butées arrêtent les roues, mais permettent aux fourches de s'insérer dans la palette 4 au coeur de la station 5.

Dans certains modes de réalisation, la au moins une station 5 est munie d'un moyen de détection de la présence de chaque palette 4 possible de l'empilement 6 le plus haut qu'elle peut recevoir. Préférablement, la station 5 est configurée en hauteur pour recevoir avec référence un nombre prédéfini de palettes 4 l'une sur l'autre en un empilement 6. Cet empilement étant placé au sol ou sur un fond horizontal de la station 5, et l'épaisseur d'une palette 4 étant normalement standard, le moyen de détection peut comprendre une pluralité de détecteurs 8 dont chacun est destiné à détecter la présence de l'une des palettes 4 possibles de l'empilement 6 maximum admissible. Différentes technologies de détecteur 8 sont possibles : laser, ultrason, infrarouge, ou autre détecteur de proximité d'objet, capteur de distance, ou position, etc. Eventuellement, chaque détecteur 8 se présente sous la forme d'une cellule de détection optique, avec, d'une part, une borne émetteur-récepteur, et, d'autre part, une borne réflecteur, ladite cellule étant disposée à la hauteur d'une palette 4 attendue, les deux bornes étant positionnées aux extrémités opposées d'une diagonale du rectangle que présente la station 5 pour recevoir l'empilement 6 de palettes 4. Ainsi, on augmente les chances de présence d'un élément de structure de la palette 4 entre ses deux faces horizontales pour occulter le détecteur 8 et permettre ainsi la détection de la palette 4.

Dans les cas où la station 5 présente des parois 7 réparties en U vu de haut, ainsi qu'un moyen de détection sous forme de plusieurs détecteurs 8 répartis verticalement, un pour chaque palette 4 possible dans la superposition, il est avantageux de prévoir des ouvertures ou fenêtres dans les parois 7 pour la circulation.

Selon une autre caractéristique additionnelle possible, la au moins une station 5 présente, en outre, un moyen de détection d'outil de manipulation de palette 4. Ce moyen de détection est préférablement positionné à l'ouverture ou embouchure de la station 5, à savoir la branche manquante entre le U qu'elle forme et un rectangle fermé, et est sous la forme d'une borne émetteur-récepteur et d'une borne réflecteur, de sorte qu'après le retour du signal suite à son interruption, on puisse considérer qu'un outil du type transporteur à fourche est entièrement dégagé de la station 5.

Dans certains modes de réalisation, le dispositif 1 comprend un système détectant le bon alignement des palettes 4. Ainsi, la station 5 présente, au niveau de son embouchure, un équipement de détection, qui détecte préférablement au niveau d'une certaine section de l'embouchure. En cas de détection d'un objet au-delà de la zone prévue pour la palette 4, c'est-à-dire une palette 4 qui n'arrive pas en fond de butée, contre la paroi 7 de fond, le dispositif 1 conclut à un défaut. Une réalisation simple peut consister à balayer une section à l'entrée de la station 5, la détection d'un objet qui interrompt cette section signalant qu'au moins une palette n'est pas assez enfoncée et donc mal référencée. Le dispositif comprend ainsi un moyen de détection d'un mauvais référencement, au moins contre le fond de la station 5, ce moyen étant localisé à l'entrée de la station 5, et capable de détecter une palette 4 pas assez rentrée. On peut envisager une solution par cellule photosensible, qui scanne par exemple une zone assimilable à un plan vertical de faible épaisseur.

L'invention a aussi pour objet un procédé selon la revendication 7 mettant en oeuvre le dispositif tel que décrit ci-dessus, à savoir un procédé de palettisation à l'aide d'un robot 3 travaillant dans une zone libre d'accès, comprenant des étapes consistant essentiellement à, d'une part, saisir l'un après l'autre sur une zone de réception les produits 2 à palettiser, et, d'autre part, déplacer les produits 2 saisis et les déposer sur une palette 4, notamment placer plusieurs produits 2 l'un à côté de l'autre, en formant des couches successives finalement superposées sur ladite palette 4.

En particulier, la zone de réception de produits 2 se situe à l'extrémité aval d'un convoyeur à bande ou rouleaux. Le procédé revient à palettiser des produits 2 délivrés en continu par une ligne de production sous la forme d'une superposition de couches comprenant chacune plusieurs produits 2 l'un à côté de l'autre.

Selon l'invention, le procédé comprend une étape de dépose au cours de laquelle la palette 4 sur laquelle les produits 2 sont déposés repose sur au moins une autre même palette 4 au sein d'une station 5, lesdites palettes formant ensemble un empilement 6 de position référencée au sein de la station 5. L'empilement 6 a été placé dans la au moins une station au préalable, c'est-à-dire avant le début de la production. Ainsi, au cours de la production, l'opérateur ne fait que retirer les palettes 4 pleines successives et la ligne n'est pas interrompue par le temps nécessaire à la remise en place d'une autre palette, surtout si celle-ci doit être cherchée après l'extraction de la palette pleine.

Ce procédé présente donc un avantage considérable par rapport à un procédé où la palettisation se fait sur une palette seule. Dans un tel cas, dans l'art antérieur amélioré par l'invention, la permutation de palette peut se passer de la façon suivante : arrivée avec une palette vide, dépose de la palette vide dans une zone tampon, extraction de la palette pleine, dépose de la palette pleine dans une zone tampon, reprise de la palette vide, dépose de la palette vide, reprise de la palette pleine, dépose de la palette pleine en aval. Un tel procédé limite les déplacements entre l'entrepôt et le robot 3, mais le temps de changement est long, et il est nécessaire de prévoir deux zones tampon à proximité du robot 3. Alternativement, le procédé de permutation dans l'art antérieur peut se passer de la façon suivante : arrivée avec une palette vide, dépose de la palette vide dans une zone tampon, prise de la palette pleine et dépose en aval, retour dans la zone tampon pour prendre une palette vide, et dépose de la palette vide pour la palettisation. Là encore, l'étape de permutation est significativement longue, Encore alternativement, la permutation dans l'art antérieur peut se faire de la façon suivante : chercher la palette pleine, la déposer en aval, chercher une palette vide, amener la palette vide pour palettisation. Encore alternativement, on peut utiliser deux équipements différents pour dégager d'abord la palette pleine puis déposer la palette vide, mais cela est de loin non optimal puisqu'il est alors nécessaire de multiplier la flotte de machine, et/ou le nombre d'opérateurs en fonction.

Grâce à l'invention, on simplifie et fluidifie ce genre de permutation sans pour autant nécessiter de multiples outils ou autres chariots de déplacement de palettes, pleines ou vides.

De façon générale, les produits 3 peuvent être du type flacon, bidon, bouteille ou autres, mais aussi boîte, caisse, ou autres. Les produits 3 sont saisis et déplacés à l'unité, et le remplissage d'une palette 4 consiste donc en une opération cyclique, au cours de laquelle plusieurs couches successives sont créées, chaque couche étant formée de plusieurs produits 2 l'un à côté de l'autre, notamment avec une orientation différente de l'un par rapport à l'autre, par exemple avec une rotation d'au moins un quart de tour.

Ainsi, selon l'invention, le robot 3 dépose les produits 2 sur une palette 4 qui repose sur une autre qui sera utilisée lors du cycle suivant. Bien entendu, le procédé se termine aussi par la palettisation de la dernière palette 4, posée au sol et donc, elle, de position normalement bien connue. En effet, l'épaisseur exacte d'une superposition de palettes 4 n'est pas entièrement prévisible compte tenu de la faible précision dimensionnelle des palettes 4.

Dans certaines réalisations, on peut prévoir une opération manuelle, par exemple périodique, du type ajout d'un intercalaire horizontal ou encore vertical, d'un objet promotionnel, d'une fiche d'information, etc.

Selon une autre caractéristique additionnelle possible, le procédé comprend une étape consistant essentiellement à déposer de façon référencée au sein de la station 5 un empilement 6 de palettes 4 similaires, l'une sur l'autre, celle du dessus pouvant ensuite recevoir les produits 2 déposés par le robot 3. Cette étape de dépose simultanée d'une pluralité de palettes 4 superposées en un empilement 6 peut être réalisée à l'aide d'un véhicule piloté par un humain, du type chariot à fourches, ou d'un véhicule autonome, auquel cas le dispositif est muni d'une centrale de supervision correspondante pour piloter au moins ledit véhicule en fonction de l'état de remplissage des palettes 4 successives.

Dans certains modes de réalisation, le procédé comprend une étape consistant essentiellement à extraire de la station 5 la palette 4 supérieure, à savoir la seule ou la plus haute de l'empilement 6, une fois qu'elle a reçu la quantité prédéfinie de produits 2 et qu'elle est considérée pleine. Compte tenu notamment des risques et de l'espace nécessaire aux manoeuvres d'une machine utilisée pour cela, on comprend, à la lumière des procédés décrits plus haut pour l'art antérieur, qu'il n'est pas avantageux d'utiliser cette même machine, type chariot élévateur, pour gérer aussi la palette vide.

Dans des modes de réalisation particuliers, pendant l'extraction de la palette 4 pleine, le robot 3 dépose les produits 2 sur une autre palette 4 au sein d'une autre station 5. Le dispositif correspondant a alors au moins deux stations 5, chacune pouvant servir à recevoir et référencer en position horizontale un empilement 6 de palettes 4. Le robot 3 peut revenir déposer des produits 2 dans la première station 5 dès lors que la palette 4 supérieure, pleine, en a été extraite, ou terminer la couche qu'il a commencée pour garantir une homogénéité de référencement, ou encore terminer entièrement la palette 4.

Selon une autre caractéristique additionnelle possible du procédé, les palettes 4 de l'empilement 6 de la même station 5 sont successivement remplies puis extraites, puis, après extraction de la dernière palette 4, la plus basse, ce sont les palettes 4 de l'empilement 6 d'une autre station 5 qui sont successivement remplies puis extraites. Ainsi l'opérateur a tout le temps de production correspondant au remplissage et à l'extraction des palettes 4 successives d'une station 5 pour déposer un empilement 6 de palettes 4 dans une autre station 5 pour avoir une production continue.

Ainsi, on traite successivement par chargement puis dégagement les palettes 4 d'un empilement 6 dans l'une des stations 5, de la plus haute à celle la plus basse, puis les palettes 4 d'une autre station 5. Si le dispositif 1 correspondant comprend uniquement deux stations 5, ce qui est préféré, la palettisation s'alterne entre deux stations 5 : on palettise toutes les palettes d'une station 5, puis toutes celles de l'autre, etc.

Dans des modes de réalisation particuliers du procédé, il comprend une étape de détection de la hauteur de la nouvelle palette 4 sur laquelle les produits 2 doivent être déposés. En effet, la palette 4 devant recevoir les produits 2 peut être posée au sol, ou sur un nombre inconnu de palettes 4. Au début du cycle de dépose sur une palette 4, et compte tenu des possibles variations d'épaisseur des palettes 4 et d'éventuelle fragilité des produits 2, il est donc préférable de détecter avec précision la hauteur exacte de la surface de base à partir de laquelle les produits 2 seront déposés en couches superposées de plusieurs produits 2 chacune.

Selon une autre caractéristique additionnelle possible du procédé, la hauteur de la nouvelle palette 4 est détectée par l'apparition d'une résistance verticale à l'occasion de la dépose d'un produit 2 , préférablement le premier à être déposé sur la palette 4.

Le robot 3 du dispositif 1, préférablement unique, présente en effet une tête dont la résistance au mouvement est détectée par le robot lui-même. Ainsi, après avoir saisi le premier produit 2 pour la palette 4, voire pour la couche, le robot 3 fait un mouvement vers le bas en vue d'une dépose. Dès qu'il rencontre une résistance assimilable à la présence d'un obstacle, on peut considérer que le produit 2 repose sur la palette 4 ou la couche de dessous.

On notera que dès lors que les palettes 4 utilisées sont de dimensions précises, la valeur de la hauteur de la surface de réception, c'est-à-dire la hauteur totale de l'empilement 6 et donc la position précise de sa surface la plus haute, peut être prédéfinie et fixée par avance plutôt que détectée à chaque palette 4.

Les paramètres de palettisation, en termes de positions dans un plan horizontal de la tête du robot 3, sont repris, mais à une hauteur différente. Le procédé de palettisation de toutes les couches successives est étalonné à partir de la hauteur détectée pour la palette 4. Ainsi, le cycle de palettisation se répète de la même manière pour chaque palette 4, à ceci près que sa hauteur d'exécution est ajustée à chaque cycle. Les paramètres représentant la hauteur de prise et la position dans un plan horizontal sont conservés, mais la hauteur de dépose est ajustée pour représenter celle effectivement détectée. Cela permet de simplifier le programme de palettisation. Bien entendu, des modifications peuvent être prévues d'une couche à l'autre pour refléter des schémas de palettisation différents d'une couche à l'autre, par exemple pour éviter des fragilités dans la palette 4 pleine. Le programme de palettisation répété pour chaque palette 4 l'une après l'autre a donc une variable modifiée automatiquement de façon cyclique, qui correspond à la hauteur à partir de laquelle ce cycle doit être répété. Bien entendu, un ajustement plus élaboré peut être possible, pour représenter la position exacte dans les trois directions du point de départ du cycle, ainsi que les angles autour de ces axes.

Dans le mode de réalisation illustré aux figures annexées, le dispositif de palettisation 1 est localisé en aval d'une ligne de production. Cette ligne débit en continu des produits 2 du type caisse, boîte ou autres, que le dispositif de palettisation 1 doit déposer sur un support plan horizontal, nommé palette 4. Les produits traités sont préférablement de forme parallélépipédique, et autoportés, c'est-à-dire qu'ils conservent cette forme de façon stable.

Les produits 2 sont déposés sur le support plan palette 4 en couches successives superposées, chaque couche étant normalement horizontale. La superposition se fait donc dans la direction verticale. Chaque couche comprend plusieurs produits 2 les uns à côté des autres, agencés en un certain schéma de palettisation qui peut changer à chaque couche. Au sein d'une même couche, les produits 2 peuvent être orientés tous de la même manière autour de l'axe vertical, ou être tournés l'un par rapport à l'autre d'au moins une fois un quart de tour.

Les produits 2 sont fournis par la ligne en aval au niveau d'un convoyeur de sortie. Ce convoyeur peut être à hauteur d'homme ou circulant au sol. Ce convoyeur de sortie peut être motorisé et alors entraîner les produits de façon active. Alternativement, le convoyeur peut laisser les produits circuler librement sous l'effet d'une autre force, comme par exemple des rouleaux libres en rotation et agencés le long d'un plan incliné, une surface à très faible coefficient de frottement sur laquelle les produits 2 continuent librement leur circulation sous l'effet de leur inertie, etc.

Le dispositif de palettisation 1 comprend un robot 3 manipulateur qui a pour fonction de déposer en couches successives les produits 2 que débite en continu la ligne de production. Le robot 3 est donc disposé au niveau de l'extrémité aval du convoyeur de sortie. Le robot 3 est un robot multi axe, avec des bras reliés successivement l'un à l'autre par une articulation avec au moins un degré de liberté à chaque fois. A l'extrémité du robot 3, posé au sol, se trouve une tête de préhension, qui peut utiliser une technologie à ventouse, à pince, ou autres. La mobilité du robot 3 définit une zone d'action possible pour la tête de préhension. Le robot 3 est localisé de sorte que le convoyeur de sortie circule dans la zone d'action du robot.

On notera que l'empilement 6 peut être déposé directement au sol, la station 5 étant dépourvue de base support horizontale mais formant un cadre uniquement latéral. Alternativement, on peut envisager que la station 5 présente une solution pour soutenir l'empilement 6 légèrement décalé du sol, préférablement de sorte que l'empilement 6 s'étende à partir d'un même plan horizontal que le robot 3. Par exemple, on peut prévoir des gouttières le long des parois 7 de bord de la station 5. Les gouttières forment une surface d'appui horizontale sur laquelle l'empilement 6 peut être déposé.

En outre, le dispositif 1 présente, dans la zone d'action du robot 3, au moins une station 5 qui peut recevoir un empilement 6 de palettes 4 l'une sur l'autre. On comprend que le robot 3 s'anime donc pour saisir les produits 2 sur le convoyeur de sortie et les déposer sur le haut de la au moins une palette 4 qui constitue l'empilement 6. Dans des cas préférés, le dispositif 1 présente deux stations 5 similaires, disposées côte à côte, le robot 3 étant positionné à peu près entre elles. On comprend que de façon générale la ou chaque station 5 se trouve dans la zone de travail du robot 3, au même titre qu'un bout du convoyeur de sortie, préférablement son extrémité de fin.

Le dispositif 1 a la particularité que son robot 3 est en permanence accessible par n'importe quelle personne circulant dans l'atelier de production. Le dispositif 1, et notamment le robot 3 lui-même est donc muni de moyen garantissant la sécurité des personnes qui peuvent l'approcher, alors qu'il est en fonctionnement. Dans l'état de la technique de la palettisation par robot, on utilise généralement des carénages, grillages ou autres parois de protection, qui délimitent un espace d'accès impossible, voire restreint, dans lequel travaille le robot. Les restrictions d'accès sont alors la condition de la sécurité.

Dans le dispositif 1, il n'y a pas de restriction d'accès au robot 3, celui-ci travaillant à des cadences suffisamment faibles pour que le contact avec un humain ne soit pas dangereux pour ce dernier. Le robot 3 peut par exemple aussi être muni d'une solution de détection de la force qui s'oppose à son mouvement : en cas de force inattendue, représentative d'un éventuel choc contre un humain, le robot 3 s'arrête, par exemple. On peut aussi envisager que le dispositif de palettisation 1 soit muni d'un moyen de détection de présence aux environs du robot 3, de sorte à ajuter son mode de fonctionnement aux éventuels risques qu'il représente pour des opérateurs. De façon générale, on comprend que le dispositif selon l'invention est dépourvu d'une enceinte fermée, éventuellement ouvrable sous condition, dans laquelle travaille le robot 3. L'environnement du robot 3 n'est donc pas sécurisé par une enceinte close qui en restreint l'accès.

Bien entendu, une paroi peut par exemple être prévue dans l'environnement immédiat du robot 3 pour éviter par exemple que le passage régulier d'un opérateur dans une zone de circulation ou de présence soit détecté et impacte le fonctionnement du robot 3 de façon incessante.

Selon l'invention, la au moins une station 5 comprend le dispositif 1 dans la zone de travail de son robot 3 permet la réception et le référencement en position horizontale d'une pluralité de palettes 4 superposées l'une sur l'autre.

En effet, dans l'invention, l'opérateur amène non pas une palette 4 à la fois en vue de la réception sur elle des produits 2 saisis par le robot 3, mais bien plusieurs palettes 4 l'une sur l'autre, alignées en vue de dessus. Comme il sera encore décrit plus loin, la palettisation consistera ensuite à remplir et dégager successivement chacune des palettes 4 superposées.

La station 5 est, selon l'invention, posée au sol et présente des guides, butées ou encore parois 7 verticales contre lesquelles les palettes 4 viennent se référencer en position. Cette solution de butée, par paroi ou autres, par exemple des axes verticaux, définit une zone de réception de forme rectangulaire vue de haut. Les palettes 4 en empilement 6 sont disposées dans cette zone de réception. Bien entendu, ces guides servent à définir la position des palettes 4 superposées et s'étendent donc sur une hauteur suffisante, et forment au moins trois butées contre lesquelles les palettes peuvent s'appuyer et être alors référencées.

Dans un mode de réalisation préféré, la station présente trois parois 7 verticales, deux étant parallèles entre elles et formant les bords, et une leur étant perpendiculaire, formant le fond. Les palettes 4 en empilement 6 sont alors insérées dans la station 5 par un mouvement parallèle au bord. En effet, vue de haut, la station 5 a une forme en U, dont les deux branches sont formées par les parois 7 de bord et l'âme formée par la paroi 7 de fond. L'extrémité des branches du U opposées à l'âme du U définissent une embouchure pour la station 5. Préférablement, cette embouchure est évasée et s'élargit à mesure que l'on s'éloigne du fond, pour faciliter l'insertion des palettes.

Préférablement, les parois 7 s'étendent depuis le sol ou proche du sol. Ainsi, la palette 4 la plus basse est au niveau du sol, alors que la palette 4 la plus haute, qui reçoit les produits 2, est naturellement à une hauteur qui dépend du nombre de palettes 4 dans l'empilement 6.

La station 5, en particulier ces guides, butées ou parois 7 contre lesquels les palettes 4 viennent être plaquées pour être référencées en position pour une compatibilité avec le réglage du robot 3, s'étendent sur une hauteur suffisante pour que chaque palette 4 de l'empilement 6 soit référencée en position. Préférablement, une station 5 peut recevoir au minimum trois palettes 4, voire cinq ou six, et la hauteur de la station 5 est adaptée. On comprend que le référencement en position des palettes 4 s'entend dans un plan horizontal, et que ce référencement est nécessaire pour éviter que le robot 3 ait à détecter la position de la palette 4 avant d'y déposer des produits 2. Ce référencement horizontal répété pour chaque palette 4 successive de l'empilement 6 et pour chaque empilement 6 successif est assuré par la station 5 et réalisé en amenant l'empilement 6 contre elle, jusqu'à son contact contre les guides, butées ou autres parois 7 qui définissent la zone de réception.

L'insertion d'un empilement 6 se fait par un mouvement normalement plan horizontal, parallèle aux bords de la station 5. On utilise généralement un équipement à fourche, qui, une fois l'empilement 6 déposé, sont parallèles aux bords de la station.

On comprend qu'au début d'un cycle, un empilement 6 de palettes 4 est amené et déposé dans la station 5. Cette dernière peut par ailleurs servir à finaliser leur superposition puisqu'elle permet de référencer chacune de la même manière. La palette 4 la plus haute de l'empilement 6 reçoit du robot 3 les produits 2 successifs puis, une fois qu'elle contient toutes les couches et qu'elle est alors pleine, est dégagée. La dépose de produits 2, ou palettisation, se fait donc à des niveaux qui dépendent du nombre de palettes 4 dans la station 5.

Il est alors nécessaire de détecter le nombre de palettes 4 effectivement présentes dans la station 5 avant que le robot 3 ne commence à déposer des produits 2. La détection de la hauteur exacte de la surface sur laquelle déposer les produits 2 sera décrite plus loin.

Le dispositif 1 est donc muni d'un moyen de détection de la présence d'une palette à une pluralité de hauteurs successives qui correspondent, chacune, à une hauteur où se trouverait une palette 4 si l'empilement 6 était assez haut.

Dans un mode de réalisation préféré, la station 5 présente trois parois 7 de référencement, formant butées, qui délimitent les contours de la zone où les palettes 4 sont simultanément reçues en un empilement 6. Le moyen de détection mentionné ci-dessus présente alors plusieurs détecteurs 8 successifs, chacun dédié à une hauteur possible de palette 4. Le détecteur 8 fonctionne préférablement avec un principe optique entre deux bornes. L'absence de signal entre les deux bornes est représentative d'une palette 4 présente. Si le signal circule entre les deux bornes, on considère alors que la palette 4 est absente. On peut imaginer une borne tant émetteur que récepteur, l'autre borne étant un miroir, ou alors un borne émetteur, l'autre récepteur, etc. Des solutions par laser sont aussi envisageables. De façon générale, le détecteur 8 détecte un objet à une hauteur prédéfinie par rapport au fond horizontal de la station sur lequel l'empilement 6 est posé.

De façon à s'assurer que la présence d'une palette 4 entre deux bornes est bien détectée, on préfère utiliser des bornes qui sont disposées en biais par rapport aux côtés du rectangle horizontal qu'occupe l'empilement 6. Avec une paire de bornes alignées parallèlement à l'un des côtés de ce rectangle, il existe un risque que des ouvertures sous la palette 4, qui servent à sa manipulation, laissent passer le signal entre deux bornes et empêchent alors la détection. Dans une réalisation simple, les deux bornes sont positionnées aux extrémités d'une diagonale du rectangle horizontal qu'occupe l'empilement 6.

Dans une réalisation possible, le moyen de détection comprend une pluralité de détecteurs 8, chacun sous la forme d'une paire de bornes, à savoir une première borne et une deuxième borne. Le dispositif 1 présente alors, au niveau de la station 5 et à l'extérieur des parois 7, deux axes verticaux, à savoir un premier axe et un deuxième, chacun environ au niveau d'une extrémité d'une diagonale du rectangle qu'occupe l'empilement 6. Toutes les premières bornes sont montées sur le premier axe, et toutes les deuxièmes bornes sont montées sur le deuxième axe. Les parois 7 contre lesquelles se trouvent axes qui reçoivent les bornes, situés au-delà de l'intérieur du U formé par la station 5, présentent alors les ouvertures adéquates pour faire circuler un signal optique entre la première borne et la deuxième borne de chaque détecteur 8 comprenant une paire de bornes. On peut réaliser une seule fenêtre pour l'ensemble des bornes montées sur le même axe, ou encore une fenêtre par borne, etc. Préférablement, la position du premier axe et/ou du deuxième axe est modifiable et les bornes sont ajustables en position sur leur axe.

Comme il a déjà été mentionné, le cycle de palettisation consiste à déposer sur la palette 4 présente dans la station 5, ou sur la palette 4 la plus haute de l'empilement 6 présent dans la station, une quantité prédéterminée de produits 2 avec une configuration prédéterminée, puis à extraire de la station la palette 4 alors pleine, et continuer avec la palette 4 en dessous.

L'extraction d'une palette 4 pleine se fait généralement avec un outil présentant des fourches, et la palettisation n'est préférablement reprise qu'une fois que cet outil est parti. Il est alors nécessaire de détecter le départ de cet outil, qui représente aussi l'état libre du volume au-dessus de l'empilement 6 pour une nouvelle palettisation.

De façon préférée, on détecte alors l'arrivée puis le départ d'un objet dans la zone que traverse l'outil pour insérer les fourches sous la palette 4 à chercher. Comme il a déjà été précisé, la station 5 présente préférablement une forme en U vue de haut, et présente ainsi une embouchure à travers laquelle sont glissées horizontalement les palettes 4 de l'empilement. Cette embouchure n'est normalement pas obturée par la palettisation. L'outil d'extraction de palette 4 pleine aborde cependant l'empilement 6 par cette embouchure et sa présence et son départ peuvent donc y être détectés.

Ainsi, de façon préférée, le dispositif 1 présente un moyen de détection de présence au niveau de l'embouchure de la station 5. Ce moyen de détection est préférablement optique, et associe une présence à la coupure du signal entre ses deux bornes, et une absence à l'existence du signale entre ses bornes, lesdites bornes étant placées l'une d'un côté et l'autre de l'autre côté de l'embouchure.

Là aussi, des fenêtres peuvent être prévues pour que les parois 7 de la station 5 n'empêchent pas le signal de circuler, alors que les bornes sont au-delà des parois qui délimitent la zone de réception de la station 5.

Une fois que la palette 4 la plus haute dans la station 5 est pleine, l'étape de permutation est lancée, au cours de laquelle ladite palette 4 sera extraite, alors que le robot 3 n'intervient pas au droit de cette même palette 4. Un signal peut alors être généré pour signaler la possibilité d'exécuter cette permutation. L'outil à fourches arrive alors et obture le moyen de détection correspondant situé dans l'embouchure de la station 5 qui forme le seul endroit pour aborder une palette 4 horizontalement, puis dégage la palette 4 pleine. Lorsqu'il est suffisamment retiré, l'outil n'obture plus le détecteur correspondant. Ce passage du détecteur d'obturation à circulation, suite à un signal de palette 4 pleine permet d'identifier qu'une palette 4 pleine a été dégagée et que le robot 3 peut reprendre une palettisation sur la nouvelle palette 4 précédemment sous la palette pleine. Bien entendu, dans le cas où la palette 4 pleine qui a été extraite était la dernière palette 4 de l'empilement 6, on peut émettre un signal représentatif, pour au moins éviter que le robot ne palettise directement au sol.

On peut prévoir que la reprise de la palettisation a lieu à l'extinction d'une temporisation qui suit la réapparition du signal après son obturation par l'outil d'extraction.

Pendant l'extraction d'une palette 4 pleine, différents états de fonctionnement du robot 3 sont possible. Le robot 3 peut tout d'abord être mis en attente et ne pas transférer de nouveaux produits 2. Cela est en particulier envisageable lorsque la palette 4 qui vient d'être extraite était la dernière palette 4 de l'empilement et que le dispositif 1 n'a pas d'autre surface de réception ou station 5 disponible. Alternativement, le robot 3 peut continuer à palettiser les produits 2 sur une autre palette 4, en particulier la palette 4 d'un empilement 6 dans une autre station 5, l'unique palette 4 d'une station 5, une palette 4 prévue dans une autre surface de réception, une palette 4 tampon ou autres.

Dans les cas où le robot 3 continue à palettiser alors qu'un outil est en train d'extraire la palette 4 pleine de la station 5 de travail, la reprise de la palettisation dans cette même station 5 peut se faire dès qu'une nouvelle palette 4 est disponible dans cette station 5, indépendamment de l'état de la palettisation créé dans l'intervalle, dès qu'une nouvelle palette 4 est disponible dans cette station 5, et qu'un nombre entier de couches a été palettisé dans l'intervalle, ou encore dès qu'une nouvelle palette 4 est disponible dans cette station 5, et qu'une palettisation complète a été effectuée dans l'intervalle.

Au début d'un cycle de palettisation sur une palette 4 dans une station 5, ou sur la palette 4 la plus haute de l'empilement 6 dans la station, il est préférable de détecter avec précision la hauteur exacte de la surface de réception, à savoir la surface supérieure de ladite palette. En effet, bien qu'une palette 4 soit une pièce de dimensions normalement standard, leur épaisseur réelle peut varier, notamment en fonction de l'usure de casses partielles, etc. Cette imprécision s'additionne dans un empilement 6 et la simple connaissance du nombre de palettes 4 présentes dans la station 5 ne suffit pas à savoir exactement la hauteur à laquelle le robot 3 doit déposer le produit 2.

Il convient ici de noter qu'il est préférable que le robot 3 lâche le produit 2 uniquement lorsque celui-ci se trouve très proche de la surface de réception, c'est-à-dire de la palette sur laquelle il doit être déposé, et ce afin d'éviter des mauvais placements, des casses de produit, du bruit de chute, etc.

Le dispositif 1 assure alors la détection de la hauteur réelle de la surface sur laquelle il doit déposer les produits 2. De façon simple, on peut utiliser un robot 3 muni d'un capteur de force, qui quantifie la résistance qui est opposée au mouvement de la tête de préhension. Lors de la dépose du premier produit 2, le robot 3 peut alors être manoeuvré pour arriver à vitesse très faible vers le bas en direction de la palette 4, et détecter à quel moment la résistance augmente de façon significative, ce qui correspond alors à la position réelle de la surface supérieure de réception de la palette 4.

Une fois détectée la hauteur réelle de la surface de réception le robot 3 s'étalonne alors de lui-même. Il répète en effet le même cycle de palettisation, mais à une hauteur différente du précédent. On notera que cet étalonnage cyclique se fait normalement uniquement pour l'axe vertical, la position horizontale de la palette 4 étant normalement garantie par la station 5 elle-même, en particulier ses bords, butées ou autres parois 7.

Dans des configurations possibles, le dispositif 1 présente une station 5 pouvant recevoir une pluralité de palettes 4sous forme d'un empilement 6. Il peut présenter, en outre, une autre surface de réception pour au moins une autre palette 4 pour les moments où la station 5 ne peut pas recevoir de produit 2. Cette surface de réception peut être assurée par une station 5, auquel cas le dispositif 1 est muni de deux stations 5 similaires, chacune pouvant alors recevoir une pluralité de palettes 4 superposées en un empilement 6. La présence de plus d'une pluralité de palettes 4, c'est-à-dire de plusieurs empilements 6 garantit au dispositif de palettisation 1 une autonomie élevée. Il suffit d'extraire périodiquement la palette 4 pleine, sans avoir besoin de ramener une palette 4 vide ou plusieurs pour assurer la continuité du procédé.

Le procédé de palettisation peut comprendre les étapes suivantes.

Une pluralité de palettes 4 superposées en un empilement 6 sont toutes amenées simultanément dans l'unique station 5, jusque-là vide, et référencées en une fois contre les butées de ladite station 5 comme des parois 7. Le robot 3 charge alors la palette 4 la plus en haut dans l'empilement, produit après produit, en formant une palette de couches de produits. Une fois la palette 4 supérieure pleine, le robot arrête d'y mettre des produits 2 et on extrait la palette pleine. Le fonctionnement éventuel du robot 3 pendant cette phase de non-disponibilité de l'unique station a été décrit plus haut. Une fois la palette 4 pleine dégagée et que la station 5 peut à nouveau recevoir des produits 2, le robot 3 reprend son activité de palettisation dans ladite station 5. On comprend que la palette 4 sur laquelle il charge les produits 2 est la dernière ou pas. Chaque palette 4 de l'empilement 6 est successivement palettisée puis extraite. Le procédé se termine une fois que toutes les palettes 4 de l'empilement 6 ont été remplies et extraites. Il reprend alors par la réception d'un nouvel empilement 6.

Grâce aux temps morts au cours desquels le robot 3 ne peut pas déposer de produit 2 dans la station 5, une autre palette 4 peut être formée progressivement. Dans les cas où l'environnement ne permet pas d'accueillir une deuxième surface au sol pour la palettisation, le robot 3 se met en attente. On notera que dans un tel cas, puisque la station 5 a déjà une pluralité de palettes 4, le temps mort pendant lequel le robot 3 attend alors, correspond uniquement à l'extraction de la palette 4 pleine. La prochaine palette 4 est déjà disponible et il n'est donc pas nécessaire d'attendre qu'une nouvelle palette 4 vienne être déposée en lieu et place de la précédente. En outre, les déplacements de l'outil d'amenée de palette vide sont significativement réduits, puisqu'il n'est pas nécessaire de ramener une palette 4 vide à chaque fois qu'une palette 4 pleine est extraite.

Le procédé peut aussi reposer sur un dispositif 1 à deux stations 5, chacune d'elle pouvant recevoir une pluralité de palettes 4 formant un empilement 6. Pour les besoins de l'explication, on parlera d'une première station 5 et d'une deuxième station.

Le procédé démarre par la fourniture dans la première station 5, d'un empilement 6 de palettes 4, par un opérateur, un automate, un moyen robotique, voire convoyeur à palettes 4, etc. Une fois la première station 5 apte à recevoir des produits 2, le robot 3 commence à y déposer des produits 2, sur la palette 4 la plus haute de l'empilement 6. Une fois cette palette 4 pleine, elle est extraite. Une fois que la palette 4 la plus haute de l'empilement 6 de la première station 5 est pleine, on peut, comme déjà évoqué, soit mettre le robot 3 en attente, en particulier lorsque la deuxième station 5 n'est pas opérationnelle pour absence d'empilement 6 ou pour palette 4 supérieure là aussi pleine, soit utiliser le robot 3 pour déposer les produits 2 dans la deuxième station 5. Là aussi, le robot 3 peut continuer la palettisation dans la deuxième station 5 jusqu'à ce que la première station 5 soit de nouveau opérationnelle suite à quoi il commencera aussitôt à palettiser dans la première station 5, jusqu'à ce qu'il ait palettisé un nombre entier de couches dans la deuxième station 5, suite à quoi il commencera à palettiser sur la première station 5, ou encore jusqu'à ce que la palette 4 de la deuxième station 5 soit entièrement pleine et prête à être extraite. On comprend qu'à l'exception de ce dernier cas, la palettisation se fait par remplissage et évacuation successivement de chaque palette 4 de la première station 5, éventuellement avec remplissage progressif d'une palette 4 dans la deuxième station 5 à l'occasion des temps morts où la première n'est pas utilisable.

Une fois la première station 5 vidée, le robot 3 permute sur la deuxième station 5, qui est normalement capable de recevoir des produits 2, soit sur une palette 4 entièrement vide, soit comprenant un nombre entier de couches finies, soit comprenant quelques produits seulement. Les éventuels produits 2 présents dans la deuxième station 5 ayant été déposés préalablement par le robot 3, ce dernier peut reprendre la palettisation sans nécessairement avoir à identifier au préalable la configuration exacte de ce sur quoi les produits 2 vont être posés, puisqu'il la connait.

Les palettes 4 de l'empilement de la deuxième station 5 sont successivement remplies et dégagées, de façon similaire au traitement décrit plus haut pour la première station 5.

Dans le cas où l'étape de remplissage et évacuation d'une palette 4 de la deuxième station 5 est initiée lorsque la palette supérieure de la première station 5 est complète, et exécuté jusqu'à son terme malgré la disponibilité retrouvée de la première station 5, le procédé revient à remplir puis dégager successivement une palette 4 de chaque station 5 alternativement.

On comprend que l'autonomie, entendue comme la possibilité de laisser le procédé fonctionner sans y apporter de nouvelle palette 4, est significativement augmenté, le tout dans un espace au sol réduit.

Enfin, dans certaines réalisations, le dispositif de palettisation 1 comprend plus de deux stations 5. Elles peuvent être arrangées par exemple en arc de cercle autour de la base du robot 3 avec laquelle ce dernier repose au sol. Le procédé est essentiellement le même que celui décrit plus haut pour deux stations, à savoir remplissage et évacuation de la palette 4 supérieure de l'une des stations 5, avec éventuellement remplissage d'une palette 4 pendant les temps morts. Les palettes 4 successives peuvent venir de la même station 5, de différentes station 5 l'une après l'autre, ou tout autre succession pertinente qui relève de la gestion automatisée du système.

On notera que vider successivement une station 5 après l'autre laisse un temps suffisant pour ramener un nouvel empilement 6 de palette 4 et évite d'arriver à une situation où toutes les stations 5 sont inexploitables. Une station 5 a le temps d'être remplie à nouveau avec un nouvel empilement 6 avant que toutes les autres ne soient plus disponibles, ce qui garantit un fonctionnement en continu.

Enfin, indépendamment du nombre de station 5 destinée à recevoir plusieurs palettes 4 superposées, et si l'espace le permet, le dispositif 1 peut aussi comprendre une zone dans laquelle une palette tampon est prévue, pour assurer la continuité du procédé lors des indisponibilités de la ou chaque station 5 pour cause de palette 4 supérieure pleine, palette 4 absente ou autre.

L'amenée d'un empilement 6 en fond de station 5 à des fins de référencement en position pour une bonne coopération avec le robot 3 peut être assurée par un véhicule autonome dans son trajet et/ou dans sa mise en route en fonction des besoins du procédé, ou par un véhicule piloté par un opérateur. Il en va de même pour l'extraction d'une palette 4 pleine.

Grâce à l'invention, il est ainsi possible de réduire de façon significative le temps total d'intervention nécessaire pour un opérateur. Il n'est pas nécessaire d'avoir une zone d'accueil tampon pour y recevoir la palette vide suivante, amenée à l'occasion du trajet effectué pour chercher la palette pleine. En outre, la permutation est beaucoup plus rapide que si une palette vide est amenée au préalable : il n'est en effet pas nécessaire, pour reprendre la palettisation, d'attendre que l'outil d'extraction ait déposé la future palette 4 dans une telle zone d'accueil tampon, dégagé la palette 4 pleine, puis remis la nouvelle palette 4. On réduit donc significativement la place nécessaire pour une accumulation en amont de la palettisation. Enfin, le fait d'amener plusieurs palettes 4 simultanément permet de réduire significativement les déplacements à faire dans un atelier, que ce soit par un opérateur ou une machine autonome.

## Revendications

1. Dispositif de palettisation (1) comprenant, d'une part, pour saisir et déplacer les produits (2) à palettiser, un robot (3) multiaxe librement accessible, et, d'autre part, pour recevoir les palettes (4) sur lesquelles les produits (2) sont déposés, au moins une station (5) aménagée et posée au sol dans une zone de travail dudit robot (3), dispositif dans lequel
la au moins une station (5) est configurée pour recevoir et référencer en position un empilement (6) de palettes (4) l'une sur l'autre, permettant la réception et le référencement en position horizontale d'une pluralité de palettes (4) superposées l'une sur l'autre, le robot (3) étant apte à déposer par couche successive les produits (2) sur le haut dudit empilement (6) de plusieurs palettes (4), **caractérisé en ce que** ladite station (5) présente des guides, butées ou encore parois (7) verticales contre lesquelles les palettes (4) viennent se référencer en position, définissant une zone de réception de forme rectangulaire vue de haut, les palettes (4) en empilement (6) étant disposées dans cette zone de réception, les guides servant à définir la position des palettes (4) superposées, les guides s'étendant sur une hauteur suffisante et formant au moins trois butées contre lesquelles les palettes (4) s'appuient et sont référencées.

2. Dispositif selon la revendication 1, qui présente, à côté de la au moins station (5), une zone au sol, qui peut recevoir au moins une palette (4).

3. Dispositif selon la revendication 1, **caractérisé en ce que**
le dispositif (1) comprend deux stations (5) l'une à côté de l'autre, le robot (3) étant positionné entre elles.

4. Dispositif selon l'une quelconque des revendications 1 à 3, où
la au moins une station (5) présente des parois (7) verticales de référencement de l'empilement (6) de palettes (4) que ladite station (5) peut recevoir, s'étendant sur une hauteur correspondant à plusieurs palettes (4).

5. Dispositif selon l'une quelconque des revendications 1 à 4, où
la au moins une station (5) est munie d'un moyen de détection de la présence de chaque palette (4) possible de l'empilement (6) le plus haut qu'elle peut recevoir.

6. Dispositif selon l'une quelconque des revendications précédentes, où
la au moins une station (5) présente, en outre, un moyen de détection d'outil de manipulation de palette (4).

7. Procédé de palettisation mettant en oeuvre le dispositif de palettisation selon l'une quelconque des revendications précédentes, à l'aide d'un robot (3) travaillant dans une zone libre d'accès, comprenant des étapes consistant essentiellement à, d'une part, saisir l'un après l'autre sur une zone de réception les produits (2) à palettiser, et, d'autre part, déplacer les produits (2) saisis et les déposer sur une palette (4),
procédé **caractérisé en ce que**
il comprend une étape de dépose au cours de laquelle la palette (4) sur laquelle les produits (2) sont déposés repose sur au moins une autre même palette (4) au sein d'une station (5), lesdites palettes formant ensemble un empilement (6) en position référencée au sein de ladite station (5),
ladite station (5) permettant la réception et le référencement en position horizontale d'une pluralité de palettes (4) superposées l'une sur l'autre, présentant des guides, butées ou encore parois (7) verticales contre lesquelles les palettes (4) viennent se référencer en position, définissant une zone de réception de forme rectangulaire vue de haut, les palettes (4) en empilement (6) étant disposées dans cette zone de réception, les guides servant à définir la position des palettes (4) superposées, les guides s'étendant sur une hauteur suffisante et formant au moins trois butées contre lesquelles les palettes (4) s'appuient et sont référencées .

8. Procédé selon la revendication 7, **caractérisé en ce que**
il comprend une étape consistant essentiellement à déposer de façon référencée au sein de la station (5) un empilement (6) de palettes (4) similaires, l'une sur l'autre, celle du dessus pouvant ensuite recevoir les produits (2) déposés par le robot (3).

9. Procédé selon l'une quelconque des revendications 7 ou 8, **caractérisé en ce que**
il comprend une étape consistant essentiellement à extraire de la station (5) la palette (4) supérieure, à savoir la seule ou la plus haute de l'empilement (6), une fois qu'elle a reçu la quantité prédéfinie de produits (2) et qu'elle est considérée pleine.

10. Procédé selon la revendication 9, **caractérisé en ce que**
pendant l'extraction de la palette (4) pleine, le robot (3) dépose les produits (2) sur une autre palette (4) au sein d'une autre station (5).

11. Procédé selon l'une quelconque des revendications 9 à 10, où
les palettes (4) de l'empilement (6) de la même station (5) sont successivement remplies puis extraites, puis, après extraction de la dernière palette (4), la plus basse, ce sont les palettes (4) de l'empilement (6) d'une autre station (5) qui sont successivement remplies puis extraites.

12. Procédé selon l'une quelconque des revendications 7 à 11, **caractérisé en ce que**
il comprend une étape de détection de la hauteur de la nouvelle palette (4) sur laquelle les produits (2) doivent être déposés.

13. Procédé selon la revendication 12, où
la hauteur de la nouvelle palette (4) est détectée par l'apparition d'une résistance verticale à l'occasion de la dépose d'un produit (2).

## Patentansprüche

1. Palettiervorrichtung (1), umfassend einerseits einen mehrachsigen, frei zugänglichen Roboter (3) zum Greifen und Bewegen der zu palettierenden Produkte (2) und anderseits mindestens eine Station (5) zum Aufnehmen der Paletten (4), auf denen die Produkte (2) abgelegt werden, die in einem Arbeitsbereich des Roboters (3) eingerichtet und auf dem Boden aufgestellt ist, wobei bei der Vorrichtung die mindestens eine Station (5) dazu konfiguriert ist, einen Stapel (6) von übereinander angeordneten Paletten (4) aufzunehmen und in der Position zu referenzieren, wobei die Aufnahme und die Referenzierung einer Mehrzahl von übereinanderliegenden Paletten (4) in der horizontalen Position ermöglicht wird, wobei der Roboter (3) dazu in der Lage ist, die Produkte (2) in aufeinanderfolgenden Schichten oben auf dem Stapel (6) mehrerer Paletten (4) abzulegen, **dadurch gekennzeichnet, dass** die Station (5) vertikale Führungen, Anschläge oder Wände (7) aufweist, gegen die sich die Paletten (4) in ihrer Position referenzieren und die einen von oben betrachtet rechteckigen Aufnahmebereich definieren, wobei die zu einem Stapel (6) angeordneten Paletten (4) in diesem Aufnahmebereich angeordnet sind, wobei die Führungen dazu dienen, die Position der übereinanderliegenden Paletten (4) zu definieren, wobei die Führungen sich über eine ausreichende Höhe erstrecken und mindestens drei Anschläge bilden, gegen die die Paletten (4) anliegen und referenziert sind.

2. Vorrichtung nach Anspruch 1, die auf der Seite der mindestens einen Station (5) einen Bodenbereich aufweist, der mindestens eine Palette (4) aufnehmen kann.

3. Vorrichtung nach Anspruch 1, **dadurch gekennzeichnet, dass** die Vorrichtung (1) zwei nebeneinanderliegende Stationen (5) umfasst, wobei der Roboter (3) zwischen ihnen positioniert ist.

4. Vorrichtung nach einem der Ansprüche 1 bis 3, wobei die mindestens eine Station (5) vertikale Wände (7) zur Referenzierung des Stapels (6) von Paletten (4), den die Station (5) aufnehmen kann, aufweist, die sich über eine Höhe erstrecken, die mehreren Paletten (4) entspricht.

5. Vorrichtung nach einem der Ansprüche 1 bis 4, wobei die mindestens eine Station (5) mit einem Mittel zur Erkennung des Vorhandenseins jeder möglichen Palette (4) des höchsten Stapels (6), den sie aufnehmen kann, versehen ist.

6. Vorrichtung nach einem der vorangehenden Ansprüche, wobei die mindestens eine Station (5) zusätzlich ein Mittel zur Erkennung eines Palettenhandhabungswerkzeugs (4) aufweist.

7. Palettierverfahren, bei dem die Palettiervorrichtung nach einem der vorangehenden Ansprüche mit Hilfe eines Roboters (3), der in einem frei zugänglichen Bereich arbeitet, eingesetzt wird, umfassend Schritte, die im Wesentlichen darin bestehen, einerseits die zu palettierenden Produkte (2) nacheinander in einem Aufnahmebereich zu greifen und andererseits die gegriffenen Produkte (2) zu bewegen und auf einer Palette (4) abzulegen,
wobei das Verfahren **dadurch gekennzeichnet ist, dass** es einen Schritt des Ablegens umfasst, bei dem die Palette (4), auf der die Produkte (2) abgelegt werden, auf mindestens einer anderen gleichen Palette (4) innerhalb einer Station (5) liegt, wobei die Paletten zusammen einen Stapel (6) in einer referenzierten Position innerhalb der Station (5) bilden,
wobei die Station (5) die Aufnahme und Referenzierung einer Mehrzahl von übereinanderliegenden Paletten (4) horizontaler Position ermöglicht und vertikale Führungen, Anschläge oder Wände (7) aufweist, gegen die die Paletten (4) sich in der Position referenzieren und die einen von oben betrachtet rechteckigen Aufnahmebereich definieren, wobei die zu einem Stapel (6) angeordneten Paletten (4) in diesem Aufnahmebereich angeordnet sind, wobei die Führungen dazu dienen, die Position der übereinanderliegenden Paletten (4) zu definieren, wobei die Führungen sich über eine ausreichende Höhe erstrecken und mindestens drei Anschläge bilden, gegen die die Paletten (4) anliegen und referenziert werden.

8. Verfahren nach Anspruch 7, **dadurch gekennzeichnet, dass** es einen Schritt umfasst, der im Wesentlichen darin besteht, in referenzierter Weise einen Stapel (6) von gleichen Paletten (4) innerhalb der Station (5) aufeinander abzulegen, wobei die oberste dann die durch den Roboter (3) abgelegten Produkte (2) aufnehmen kann.

9. Verfahren nach einem der Ansprüche 7 oder 8, **dadurch gekennzeichnet, dass** es einen Schritt umfasst, der im Wesentlichen darin besteht, die oberste Palette (4), d. h. die höchste des Stapels (6) aus der Station (5) zu entnehmen, sobald sie eine vordefinieret Menge an Produkten (2) aufgenommen hat und als voll betrachtet wird.

10. Verfahren nach Anspruch 9, **dadurch gekennzeichnet, dass** während der Entnahme der vollen Palette (4) der Roboter (3) die Produkte (2) auf einer anderen Palette (4) innerhalb einer anderen Station (5) ablegt.

11. Verfahren nach einem der Ansprüche 9 bis 10, wobei die Paletten (4) des Stapels (6) derselben Station (5) nacheinander befüllt und dann entnommen werden, wobei nach der Entnahme der letzten, untersten Palette (4) die Paletten (4) des Stapels (6) einer anderen Station (5) nacheinander befüllt und dann entnommen werden.

12. Verfahren nach einem der Ansprüche 7 bis 11, **dadurch gekennzeichnet, dass** es einen Schritt des Erfassens der Höhe der neuen Palette (4), auf der die Produkte (2) abgelegt werden sollen, umfasst.

13. Verfahren nach Anspruch 12, wobei die Höhe der neuen Palette (4) durch das Auftreten eines vertikalen Widerstands beim Ablegen eines Produkts (2) erfasst wird.

## Claims

1. Palletization device (1) comprising, first, a freely accessible multiaxial robot (3) for gripping and moving the products (2) to be palletized and, second, at least one station (5) arranged and placed on the ground in a work zone of said robot (3), for receiving the pallets (4) on which the products (2) are deposited, in which device
the at least one station (5) is configured to receive and to position-reference a stack (6) of pallets (4) one above the other, allowing the receiving and the horizontal position-referencing of a plurality of pallets (4) superposed one above the other, the robot (3) being able to deposit the products (2) in successive layers on the top of said stack (6) of a plurality of pallets (4), **characterized in that** said station (5) has guides, stops or, alternatively, vertical walls (7) against which the pallets (4) are position-referenced, defining a receiving zone of rectangular form when seen from above, the pallets (4) in a stack (6) being disposed in this receiving zone, the guides being used to define the position of the superposed pallets (4), the guides extending over a sufficient height and forming at least three stops against which the pallets (4) bear and are referenced.

2. Device according to Claim 1, which, beside the at least one station (5), has a zone on the ground that can receive at least one pallet (4).

3. Device according to Claim 1, **characterized in that** the device (1) comprises two stations (5) one beside the other, the robot (3) being positioned between them.

4. Device according to any one of Claims 1 to 3, wherein the at least one station (5) has vertical walls (7) for referencing the stack (6) of pallets (4) that said station (5) can receive, extending over a height corresponding to a plurality of pallets (4).

5. Device according to any one of Claims 1 to 4, wherein the at least one station (5) is equipped with a means for detecting the presence of each possible pallet (4) in the highest stack (6) that it may receive.

6. Device according to any one of the preceding claims, wherein
the at least one station (5) further has a means for detecting a tool for manipulating the pallet (4).

7. Palletization method implementing the palletization device according to any one of the preceding claims, using a robot (3) working in a free access zone, comprising steps consisting essentially in, first, gripping the products (2) to be palletized one after the other in a reception zone and, second, moving the gripped products (2) and depositing them on a pallet (4),
which method is **characterized in that**
it comprises a depositing step during which the pallet (4) on which the products (2) are deposited rests on at least one other identical pallet (4) within a station (5), said pallets together forming a stack (6) position-referenced within said station (5),
said station (5) allowing the receiving and the horizontal position-referencing of a plurality of pallets (4) superposed one above the other, having guides, stops or, alternatively, vertical walls (7) against which the pallets (4) are position-referenced, defining a receiving zone of rectangular form when seen from above, the pallets (4) in a stack (6) being disposed in this receiving zone, the guides being used to define the position of the superposed pallets (4), the guides extending over a sufficient height and forming at least three stops against which the pallets (4) bear and are referenced.

8. Method according to Claim 7, **characterized in that** it comprises a step consisting essentially in depositing in a referenced manner within the station (5) a stack (6) of similar pallets (4), one above the other, it being possible for the top pallet then to receive the products (2) deposited by the robot (3).

9. Method according to either one of Claims 7 and 8, **characterized in that**
it comprises a step consisting essentially in removing the upper pallet (4) from the station (5), namely the only pallet or the highest pallet in the stack (6), once it has received the predefined quantity of products (2) and is deemed to be full.

10. Method according to Claim 9, **characterized in that** during the removal of the full pallet (4), the robot (3) deposits the products (2) on another pallet (4) within another station (5).

11. Method according to either one of Claims 9 and 10, wherein
the pallets (4) in the stack (6) of one and the same station (5) are successively filled and then removed, and then, after removal of the last pallet (4), which is the lowest pallet, it is the pallets (4) of the stack (6) of another station (5) that are successively filled and then removed.

12. Method according to any one of Claims 7 to 11, **characterized in that**
it comprises a step for detecting the height of the new pallet (4) on which the products (2) are to be deposited.

13. Method according to Claim 12, wherein
the height of the new pallet (4) is detected by the appearance of a vertical resistance when a product (2) is deposited.
